(19) **Europäisches Patentamt / European Patent Office / Office européen des brevets**

(11) **EP 3 075 568 A2**

(12) # EUROPEAN PATENT APPLICATION

(43) Date of publication:
**05.10.2016 Bulletin 2016/40**

(51) Int Cl.:
**B60B 33/00** $^{(2006.01)}$    **F16H 25/12** $^{(2006.01)}$

(21) Application number: **16020101.8**

(22) Date of filing: **30.03.2016**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(30) Priority: **31.03.2015  IT MI20150458**

(71) Applicant: **Vaccaro, Marco**
**20812 Limbiate (MB) (IT)**

(72) Inventor: **Vaccaro, Marco**
**20812 Limbiate (MB) (IT)**

(74) Representative: **Saporiti, Emilio Luigi**
**Dott. Franco Cicogna & C. S.r.l.**
**Via Visconti di Modrone, 14/A**
**20122 Milano (IT)**

(54) **GEOMETRIC CONSTRUCTION FOR MAKING MECHANISMS TO TRANSFORM A TRANSLATING MOVEMENT INTO A ROTARY MOVEMENT AND VICE VERSA**

(57)   A geometric construction for making mechanisms to transform a translating movement into a rotary movement and vice versa, comprising three or more surfaces, which are slanted with a same slanting angle with respect to a reference plane and being so arranged that straight lines crossing said reference plane are equidistant from a point, and a set of points which are displaced on the slanted surfaces, thereby providing, with respect to said reference plane, a slanting and/or level variation of the plane defined by said points. Said construction, with an intercoupled cage configuration, can be used for making self-orienting wheels.

**FIG. 1**

**Description**

**BACKGROUND OF THE INVENTION**

The present invention relates to a geometric construction for making mechanisms to transform a translating movement into a rotary movement and vice versa.

**SUMMARY OF THE INVENTION**

The aim of the present invention is to provide a geometric construction allowing to make driving mechanisms of several types, such as, for example, remote control driving actuators, self-centering support systems, non-castor self-orienting wheels, and so on.

Within the scope of the above aim, a main object of the invention is to provide such a construction allowing to make mechanisms having improved functional characteristics compared to prior mechanisms conventionally used so far.

A further object of the present invention is to provide such a construction which, owing to its structural improved characteristics, is very reliable and safe in operation.

According to one aspect of the present invention, the above aim and objects, as well as yet other objects, which will become more apparent hereinafter, are achieved by a geometric construction for making mechanisms to transform a translating movement into a rotary movement and vice versa, characterized in that said geometric construction comprises three or more surfaces, which are slanted with a same slanting angle with respect to a reference plane and being so arranged that straight lines crossing said reference plane are equidistant from a point and a set of points which are displaced on the slanted surfaces, thereby providing, with respect to said reference plane, a slanting and/or level variation of the plane defined by said points.

**BRIEF DESCRIPTION OF THE DRAWINGS**

Further characteristics and advantages of the present invention will become more apparent hereinafter from the following detailed disclosure of a preferred, though not exclusive, embodiment of the invention which is illustrated, by way of an indicative but not limitative example, in the accompanying drawings, where:

Figure 1 shows a graphical diagram of the geometric construction according to the present invention;
Figure 2 is a perspective view showing an illustrative embodiment of a mechanism made by the geometric construction according to the present invention, in particular a self-orienting wheel;
Figure 3 is a further perspective view showing the self-orienting wheel of the preceding figure in a different operating position thereof;
Figure 4 is a side elevation view, as partially cross-sectioned, of the self-orienting wheel; and
Figure 5 is a side elevation view, partially seen through, of the same self-orienting wheel.

**DESCRIPTION OF THE PREFERRED EMBODIMENTS**

With reference to the number references of the above mentioned figures, the geometric construction according to the present invention, generally indicated by the reference number 1, comprises three or more surfaces B, equally inclined or slanted with respect to a reference plane, and so arranged that the lines intersecting the reference plane are equidistant from a point O; the construction comprises moreover a set of points which are adapted to be displaced on the inclined surfaces.

Said set of points being displaced on the inclined or slanted planes defines, with respect to the reference plane, an inclination variation and/or level variation of the plane of said points.

Thus, by the geometric construction according to the present invention it is possible to transform a translating movement into a rotary movement with an axis parallel to the reference and with an orientation determined by the displacement direction or, vice versa, to transform a rotary movement into a translating movement.

Moreover, a possible rotation of the points about the centers thereof would be transformed into a change of level, combinable with the inclination or slope variations.

In the regions about the points, the plane or flat surface may be replaced by a rotary surface with an axis perpendicular to the related plane, thereby modulating the inclination of the resulting plane according to requirements.

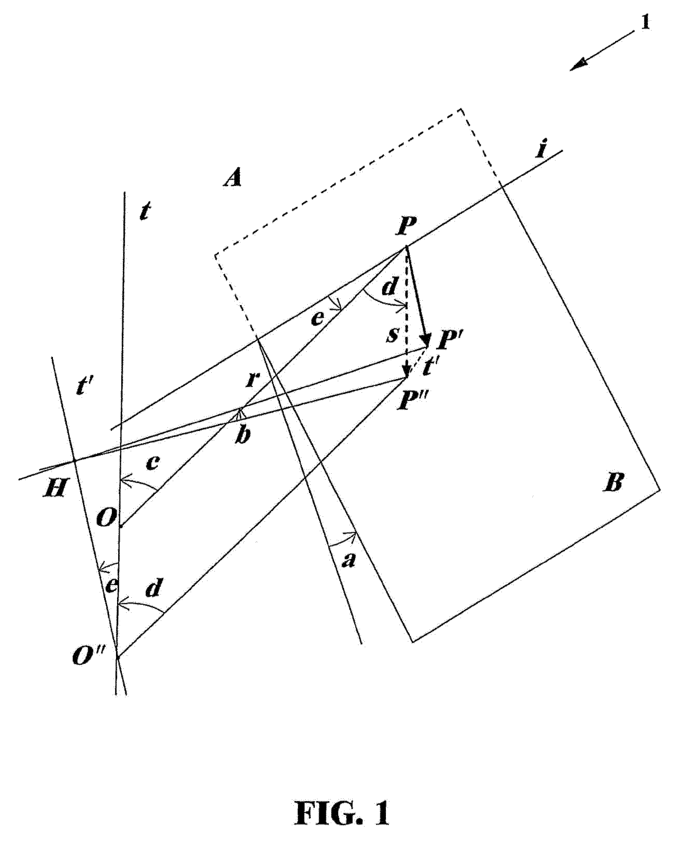

According to a first exemplary embodiment of the invention, being shown in Figure 1, the surfaces B are flat surfaces and no rotary movements about O are applied.

Please consider on the plane A the fixed point O and points P spaced by a distance r from O.

The points P are bound to move on the inclined planes B forming, with A, a dihedral having an inclination G

(G = tan $\alpha$).

The intersections of the inclined planes B with the plane A are the right lines i, forming an angle e with the connecting line of P and O.

The points P are subjected to a translation P-P', without any rotary movement.

The projection on A is shown by the vectors P-P" of module s.

The displacement from the point P to the point P', on the plane B, would involve a level variation z = s G sen (d + e).

We define by t the parallel line to P-P" for O, t' being the straight line forming with t an angle e, passing through O", spaced by a distance s from O; H is the projection of P" on t'. The inclination G' (G' = tan b) of P'-H is given by z / r sen (d+e), that is

$$S\ G\ sen\ (d+e)\ /\ r\ sen\ (d+e),$$

from which:

$$G' = s\ G\ /\ r$$

or

$$G' : s = G : r$$

The points P' define a plane with an inclination G' with respect to A, which is directly proportional to the module of the projection on A of the displacement vector and to the inclination of B on A, reversely proportional to the distance O-P. Accordingly, the resulting plane will have the following properties:

    the generated plane does not depend on the number of the points P (at least 3) or on their arrangement;
    the inclination value is independent of the direction of P-P";
    the inclination value is independent of e;
    the point O translates into O" without any level or elevation variation;
    the projections on A of the contour lines form with P-P" an angle corresponding to e;
    for e = O, the projections on A of the lines having a maximum slope are perpendicular to P-P".

The points P could also not be arranged along a circumference of center O and radius r. In the case, to hold the mentioned properties, it is necessary to maintain constant the G / r ratio between the slope of planes and the distances of the related points from O.

According to a further embodiment of the invention, rotary movements are herein applied.

A rotary movement w of the P about the perpendicular to A for O will cause an elevation change q of the plane generated by the P', without other interactions (with the exception of the elevation of O") with respect to the above disclosure, according to following formula:

$$q = r\ [sen\ w\ cos\ e \pm (1 - cos\ w)\ sen\ e],\ +\ for\ w\ different\ from\ e,\ -\ for\ w\ in$$

concordance with e.

    Fore=O,q=rsenw
    Fore=±90°,q=±r(1-cosw).

The composition of rotary movements and translating movements is a commutative one.

According to a further illustrative embodiment of the present invention, the surfaces B are not flat surfaces.

The points P at the start are part of the plane A, and will translate (and/or rotate) while holding the same arrangement on the resulting plane.

To hold that same geometric arrangement, the surfaces B must be rotary surfaces with axes passing through P and perpendicular to planes according to the starting conditions.

In further embodiments, depending on the required result, it is possible to design specific solutions, even by considering a flexible surface housing the P', by a dedicated designing.

The geometric construction according to the present invention allows to make different mechanisms, such as, for example, remote control driving actuators, self-centering supporting systems, self-orienting wheels of a non-castor type, and so on.

Hereinbelow will be disclosed an illustrative embodiment of a self-orienting wheel, constituting a valid alternative, even with respect to an aesthetic standpoint, to conventional castor wheels.

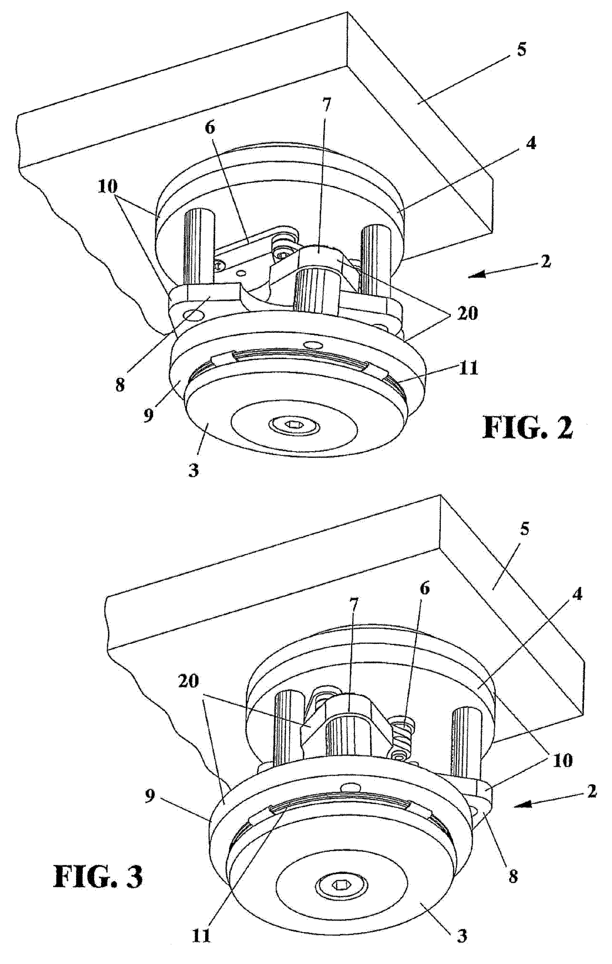

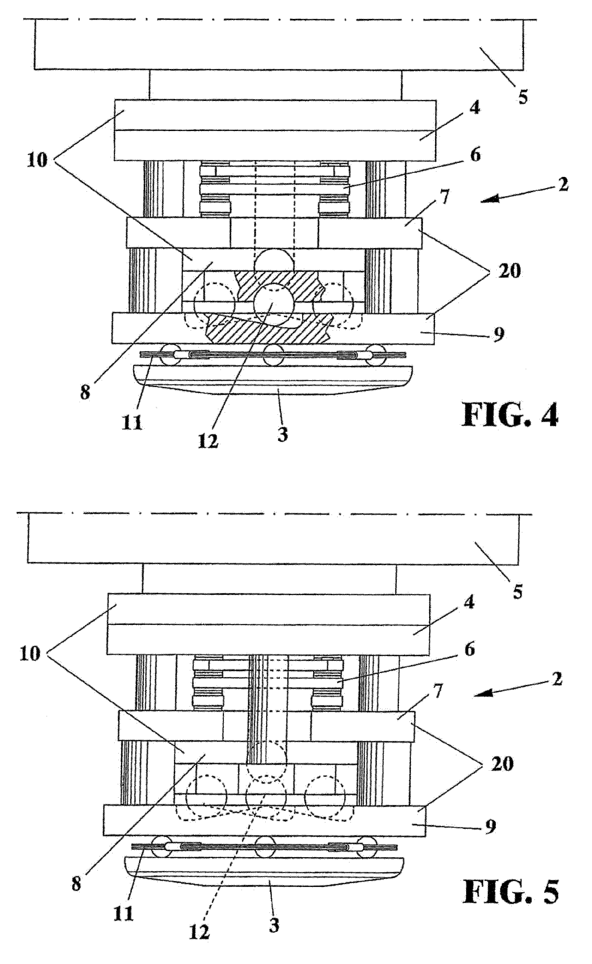

With reference to Figures 2-5, the self-orienting wheel, generally indicate by the reference number 2, comprises two intercoupled cages, that is a first cage 10 and a second cage 20, constituting the orienting mechanism, and a free wheel 3, for performing movement.

This construction is ideally traversed by a vertical axis which, in a rest condition, will encounter the center of all the levels.

The construction is schematically constituted by four elements in addition to the free wheel.

The first element, indicated by the reference number 4, constitutes the top plane of the first cage and is used for coupling to the body 5 the article to be driven.

To the bottom surface is coupled a system preventing or limiting a related axial rotation of the two cages, or "anti-rotary system" of the cages, achieved by means of orthogonal sliding movements or through two overlapping articulated parallelograms, indicated by the reference number 6.

On the top surface of the second cage 20 is arranged the other connection of the anti-rotary system 6.

The second element of the construction comprises the underlying plane 7, constituting the sliding surface of the central point.

The third element of the construction is the bottom closure 8 of the first cage 10 housing the sliding points, a top central one and at least three bottom peripheral ones.

The fourth element of the construction is constituted by the end element 9 of the second cage 20, on which are formed inclined or slanted planes for sliding the peripheral points.

The bottom face of the fourth element 9 supports the free wheel 3.

The free wheel 3, pivoted at the center thereof, is able to freely rotate even in presence of a non-centered load, for example by means of a cage of small balls 11 arranged between the fourth element 9 and the wheel 3.

The bottom surface is suitably configured, generally in a convex configuration.

The sliding points are advantageously made by any suitable materials, adapted to provide the sliding properties, or are made by balls 12, housed in the third element 8.

The peripheral points pertain to a circumference.

The central sliding plane is a horizontal plane.

The peripheral planes have the same inclination and are so arranged that the lines of maximum slope are tangential lines with respect to the center.

The construction according to the present invention operates in the following manner.

The second cage 20 may translate with respect to the first cage 10.

The geometric arrangement of the assembly will transform the displacement into an inclination of the free wheel 3, which will transversely rotate with an axis parallel to the displacement itself.

Thus, by the subject self-orienting wheel, at the start of the movement, the article would not be subjected to objectionable transversal displacements occurring with conventional castor wheels, and moreover will not be subjected to significant elevation changes.

The stability, considered as a resistance to displacement impulses of an article supported by self-orienting wheels according to the present invention, will be determined by the profile of the free wheel 3.

Thus, it will be possible to preset, in the designing operation, the force required to start the displacement, by considering the weight of the supported article and by suitably configuring the convexity of the free wheel 3.

The self-orienting wheel according to the present invention may be made with a plurality of modified embodiments.

For example, the sliding surfaces may be constituted, instead of planes, by rotary surfaces with an axis perpendicular to the reference (virtual) plane, considering the fact that such a solution would involve a verification of the stability.

The central sliding point may be replaced by a plurality of peripheral points (at least 3), while holding the same rules which have been hereinabove indicated for the bottom peripheral points.

It has been found that the invention fully achieves the intended aim and objects.

In fact, the invention has provided a geometric construction allowing to make operatively advantageous mechanisms.

For example, the self-orienting wheel according to the present invention constitutes a solution for those cases in which conventional castor wheels are not suitable or have functional limits.

The geometric construction according to the present invention is adapted to suitably orient the inclination of the free wheel for fitting the movement in any direction.

In a rest condition, the free wheel will be horizontally arranged in a bearing condition, thereby providing the desired stability; however, differently from conventional free castor wheels, the stability may be designed in the designing step and may be easily changed in the making step.

The resistance to the displacement impulses may be changed from a very negligible value to a multiple of the supported article weight, by merely modifying the profile or contour of the free wheel.

The orientation of the free wheel does not require, and accordingly does not cause, any transversal displacement, and the movement will start without any start jump, and the direction change cannot be detected.

In practicing the invention, the materials used, as well as the contingent size and shapes may be any, depending on requirements.

**Claims**

1.  A geometric construction for making mechanisms to transform a translating movement into a rotary movement and vice versa, such as remote control driving actuators, self-centering support systems, non-castor self-orienting wheels, **characterized in that** said geometric construction comprises three or more surfaces, which are slanted with a same slanting angle with respect to a reference plane and being so arranged that straight lines crossing said reference plane are equidistant from a point, said construction comprising a set of points which are displaced on the slanted surfaces, thereby providing, with respect to said reference plane, a slanting and/or level variation of the plane defined by said points.

2.  A geometric construction, according to claim 1, **characterized in that** said surfaces are flat surfaces.

3.  A geometric construction, according to claim 1, **characterized in that** said surfaces are non-flat surfaces.

4.  A geometric construction, according to claim 1, **characterized in that** said geometric construction constitutes a self-orienting wheel.

5.  A geometric construction, according to claim 4, **characterized in that** said geometric construction comprises two intercoupled cages, that is a first cage and a second cage, constituting an orienting mechanism, and a free wheel for performing movement.

6.  A geometric construction, according to claim 5, **characterized in that** said geometric construction comprises:

    coupling means for providing coupling to an article to be moved;
    connecting means for connecting said first cage to an anti-rotary system;
    connecting means for connecting said second cage to said anti-rotary system;
    a central sliding surface;
    a central sliding point;
    a plurality of peripheral sliding points;
    a plurality of peripheral sliding slanted planes; and
    coupling means for providing coupling to said free wheel.

7.  A geometric construction, according to claim 5, **characterized in that** said geometric construction comprises four elements, in addition to said free wheel; a first element forming a top plane of said first cage and operating for providing coupling to a body of an article to be moved; to said bottom surface being coupled a cage anti-rotary system; on a top surface of the second cage being arranged a further connection of said anti-rotary system; a second element of said construction comprising an underlying plane constituting a sliding surface of said central point; a third element forming a bottom closure of said first cage and including said sliding points, a top central point and at least three peripheral bottom points; a fourth element forming an end element of the second cage, on which are formed a plurality of slanted planes for sliding the peripheral points thereon; the bottom face of the fourth element supporting said free wheel.

8.  A geometric construction, according to claim 7, **characterized in that** said free wheel, pivoted at a central portion thereof, is adapted to freely rotate, even under a non-centered loading thereon, through a ball cage being arranged between the fourth element and said wheel.

9. A geometric construction, according to claim 7, **characterized in that** the bottom surface of said free wheel is a shaped bottom surface, and generally has a convex configuration; said sliding points being made of such a material as to provide a sliding movement, or through sliding balls housed in the third element.

**FIG. 1**

**FIG. 2**

**FIG. 3**

FIG. 4

FIG. 5